# EUROPEAN PATENT SPECIFICATION

(11) **EP 0 380 171 B1**
(45) Date of publication and mention of the grant of the patent: **28.07.1993**
(21) Application number: 90200147.8
(22) Date of filing: 22.01.1990
(51) Int. Cl.: C02F 5/08, C02F 1/72

(54) **Agent and process for the cleaning of irrigation or water-distribution systems used in, for example, agriculture and horticulture**
Mittel und Verfahren zur Reinigung von Bewässerungs- und Wasserverteilungssystemen, zum Beispiel in der Landwirtschaft und der Gärtnerei
Agent et procédé de nettoyage des systèmes d'irrigation ou de distribution d'eau, notamment dans l'agriculture ou l'horticulture

(30) Priority: 23.01.1989 NL 8900153
(43) Date of publication of application: 01.08.1990
(73) Proprietor: Kok, Paulus Wilhelmus Nicolaas Maria, NL-1171 WB Badhoevedorp (NL); Kok, Thomas Everhardus Henricus Maria, NL-1161 TA Zwanenburg (NL)
(72) Inventor: Kok, Paulus Wilhelmus Nicolaas Maria, NL-1171 WB Badhoevedorp (NL); Kok, Thomas Everhardus Henricus Maria, NL-1161 TA Zwanenburg (NL)
(74) Representative: Hooiveld, Arjen Jan Winfried

(56) References cited:
- EP-A- 0 183 894
- FR-A- 2 034 005
- GB-A- 1 052 132
- GB-A- 2 218 083
- US-A- 3 623 991
- US-A- 4 292 293

## Description

The invention relates to an agent and a process for the cleaning of irrigation and water distribution systems used in agriculture and horticulture.

Such agents and processes are generally known. In agriculture and horticulture it is customary with substrate cultivation, in which plant and flowers are grown in a substrate of, for example, rock wool, sphagnum peat beds or foam flakes compressed to mats, to clean the substrate system through which the plants or flowers are supplied with water, whether or not enriched with, for example, nutritive substances, after the cultivation process. Such cleaning is done with, for instance, a chlorine-containing bleaching agent (sodium hypochlorite, NaClO). It is also common practice in agriculture and horticulture, when plants or flowers are cultivated in the soil, to clean the drip-feed system whereby water, which may or may not contain nutritive substances, is supplied dropwise to plants or flower from above, likewise with, for instance, the aforesaid chlorine-containing bleaching agent after the cultivation process. Such a cleaning of the substrate or drip-feed system proves to be necessary after each cultivation process in view of the deposits formed during operation in the aforesaid systems by algae and bacteria, sometimes called organic pollution, and by salts such as calcium sulphate, calcium phosphate, iron phosphate, aluminum silicate and iron silicate, sometimes called inorganic pollution. Besides sodium hypochlorite solutions in various strengths, nitric acid is also used for cleaning of the aforesaid systems, especially for the detachment of deposited sulphates and phosphates. It will be clear that when a substrate or drip-feed system is not cleaned, such a system may clog at least partly, which could have very adverse effects on the cultivation of plants or flowers with highly detrimental financial consequences for agriculture and horticulture.

The known agent, for example in the form of a sodium hypochlorite (NaClO) solution in water, has a disadvantage in that as a strong oxidant it normally reacts violently with combustible and reducing substances and as a strong base it generally reacts violently with acids to form the highly toxic chlorine gas (Cl₂). The latter especially is a serious disadvantage, because - as mentioned hereinbefore - besides the chlorine-containing bleaching agent nitric acid is also sometimes used for cleaning of a substrate or drip-feed system. When these two agents are improperly introduced after one another, that is to say without intermediate flushing of the said systems with water, the highly toxic chlorine gas readily forms. If this chlorine gas comes into contact with hydrogen gas (H₂) or with ammonia gas (NH₃) which is present in a good many manures or nutrients used in horticulture, the resultant gas mixture may explode even merely exposed to sunlight. The known chlorine-containing bleaching agent has the additional drawback that it also reacts violently towards organic materials and that it corrodes all metals, aluminum and zinc in particular. A further disadvantage held against the known chlorine-containing bleaching agent is that it damages the human skin and eyes upon direct contact, so in the handling of this agent in agriculture and horticulture it is imperative to wear gloves, a face shield and protective clothing.

Considering the chemical aggressiveness of sodium hypochlorite, it will be obvious that the diverse precautionary measures which have to be taken are very troublesome to agriculture and horticulture. On the account of the aforesaid drawbacks, the chemical aggressiveness and toxicity of sodium hypochlorite require that this agent can only be used after each cultivation process for the cleaning of the aforesaid systems, that is for the detachment of substances which have already been deposited in these systems.

The British patent specification no. 1 052 132 describes a process for the cleaning of water distribution or irrigation systems which makes use of a water-soluble polyelectrolyctic organic polymer prepared from a monomer containing the group > C = C - R, where R is a nitrile, amide or COOM radical, M standing for hydrogen, ammonium, metal or an organic radical. This polyelectrolytic polymer may, for instance, be a polymer of acrylic acid or a copolymer with a monomer such as alkyl acrylate, or a salt of such a polymer or copolymer.

The process described in the British patent specification no. 1 052 132 has the disadvantage that, whereas it does prevent the deposition of inorganic pollutants such as calcium phosphate, iron phosphate, aluminum silicate and iron silicate in the foresaid systems, it hardly obviates the deposition of organic pollutants such as algae and bacteria. This disadvantage renders the process described in the said British patent virtually useless in practice, because the aforesaid systems clog up all the same at least partly in actual practice.

It is an object of the present invention to provide a chemically non-aggressive and non-toxic agent and process for the cleaning, if necessary also during the cultivation process, of irrigation or water distribution systems used in, for example, agriculture and horticulture, whereby on the hand both organic and inorganic substances (algae and bacteria and salts) are prevented from depositing in the said systems and on the other hand substances that have already deposited in the said systems are detached.

To this end, the invention relates to an agent for the cleaning of irrigating or water distributing systems used in agriculture and horticulture, characterized in that the agent contains hydrogen peroxide and a polyelectrolyte. In this connection, it is worth noting that a polyelectrolyte is here taken to denote a polymerized organic compound which has wholly or partly retained its electrolytic dissociation. In consequence, a polyelectrolyte is a polymeric compound which has ionexchanging segments in its molecular skeleton. It is the crystal-disturbing and the dispersant action of a polyelectrolyte which not only prevent inorganic substances from depositing in a substrate or drip-feed system but also cause inorganic substances which have already deposited therein to be detached. The same applies to the hydrogen peroxide. For instance, if the hydrogen peroxide dissolved in the irrigation liquid in a suitable ratio, cleaning with such a chemically non-aggressive and non-toxic solution can be carried out most conveniently during the cultivation process.

In an embodiment of an agent according to the invention the polyelectrolyte comprises a homopolymer of acrylic acid.

In another embodiment of an agent according to the invention the polyelectrolyte comprises a copolymer of acrylic acid and alkyl acrylate.

In a further embodiment of an agent according to the invention the polyelectrolyte comprises a salt or a partly neutralized acid of one of the substances from the group of a homopolymer of acrylic acid and a copolymer of acrylic acid and alkyl acrylate. In this context, a salt is understood to denote a wholly neutralized acid.

In a further embodiment of an agent according to the invention the agent comprises a mixture of at least one of the substances from the group of a homopolymer of acrylic acid, a copolymer of acrylic acid and alkyl acrylate on the one hand and/or a salt of one of the substances from the group of a homopolymer of acrylic acid and a copolymer of acrylic acid and alkyl acrylate on the other hand. A suitable mixing proportion is, for example, 15 : 1.

In a further embodiment of an agent according to the invention is characterized in that molecular weight of the polyectrolyte is at least 1000.

The agent according to the invention is characterized in that it contains hydrogen peroxide. The use of hydrogen peroxide, for example in a solution with 99.99% water, for example water poured out over plants, presents a very great advantage in that the deposition of organic pollutants is thereby prevented and/or combated effectively and that such a solution is chemically non-aggressive and non-toxic, so that cleaning can also be carried out during the cultivation process.

A process of the type mentioned hereinbefore is, according to the invention, characterized in that a polyelectrolyte mentioned hereinbefore and hydrogen peroxide, are successively introduced through these systems in arbitrary order.

By way of illustration, the structural formulae of a few of the aforesaid polyelectrolytes are shown below. 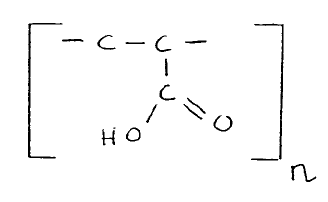
homopolymer of acrylic acid 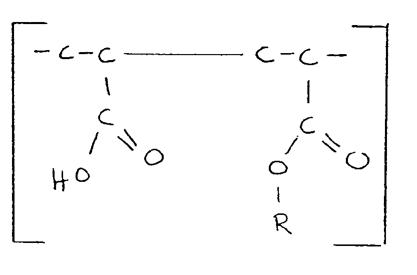
copolymer of acrylic acid and alkyl acrylate

The British patent application no. 2 218 083 in particular describes a dilute aqueous solution of hydrogen perioxide in particular promoting seed germination and plant growth when watered on them.

## Claims

1. An agent for the cleaning of irrigation or water distribution systems used in agriculture and horticulture and containing a polyelectrolyte comprising at least one of the substances from the group of a homopolymer of acrylic acid, a copolymer of acrylic acid and alkyl acrylate, a salt and a partly neutralized acid of the homopolymer and/or of the copolymer, charactarized in that the agent contains hydrogen peroxide in addition to the polyelectrolyte.

2. An agent according to claim 1, characterized in that the molecular weight of the polyelectrolyte is at least 1000.

3. A process for the cleaning of irrigation systems in agriculture and horticulture using a polyelectrolyte according to claim 1, characterized in that the polyelectrolyte and hydrogen peroxide are successively introduced through these systems in arbitrary order.

## Patentansprüche

1. Mittel zur Reinigung von Bewässerungs- oder Wasserverteilungssystemen, die in Landwirtschaft und Gartenbau verwendet werden, und enthaltend einen Polyelektrolyten, der wenigstens eine der Substanzen aus der Gruppe aus einem Homopolymer von Acrylsäure, einem Copolymer von Acrylsäure und Alkylacrylat, einem Salz und einer teilweise neutralisierten Säure des Homopolymers und/oder des Copolymers umfaßt, dadurch gekennzeichnet, daß das Mittel zusätzlich zum Polyelektrolyten Wasserstoffperoxid enthält.

2. Mittel nach Anspruch 1, dadurch gekennzeichnet, daß das Molekulargewicht des Polyelektrolyten wenigstens 1000 ist.

3. Verfahren zur Reinigung von Bewässerungssystemen in Landwirtschaft und Gartenbau unter Verwendung eines Polyelektrolyten nach Anspruch 1, dadurch gekennzeichnet, daß der Polyelektrolyt und Wasserstoffperoxid nacheinander durch diese Systeme in beliebiger Reihenfolge geleitet werden.

## Revendications

1. Agent de nettoyage des systèmes d'irrigation et de distribution d'eau utilisés en agriculture et en horticulture et contenant un polyélectrolyte, comprenant au moins une des substances du groupe formé par un homopolymère d'acide acrylique, un copolymère d'acide acrylique et d'acrylate d'alkyle, un sel et un acide partiellement neutralisé de l'homopolymère et/ou du copolymère, caractérisé en ce que l'agent contient du peroxyde d'hydrogène en plus du polyélectrolyte.

2. Agent selon la revendication 1, caractérisé en ce que la masse moléculaire du polyélectrolyte est d'au moins 1000.

3. Procédé de nettoyage de systèmes d'irrigation en agriculture et en horticulture employant un polyélectrolyte selon la revendication 1, caractérisé en ce que le polyélectrolyte et le peroxyde d'hydrogène sont introduits successivement dans ces systèmes, dans n'importe quel ordre.
